# EUROPEAN PATENT SPECIFICATION

(11) **EP 2 223 005 B1**
(45) Date of publication and mention of the grant of the patent: **05.09.2012**
(21) Application number: 08864335.8
(22) Date of filing: 19.12.2008
(51) Int. Cl.: F17C 1/14, B60K 15/03

(54) **PRESSURE TANK**
DRUCKBEHÄLTER
RESERVOIR SOUS PRESSION

(30) Priority: 21.12.2007 PL 38413407
(43) Date of publication of application: 01.09.2010
(73) Proprietor: Elpigaz Sp. Z O.O., 80-298 Gdansk (PL)
(72) Inventor: JARZYNSKI, Grzegorz, PL 87-220 Radzyn Chelminski (PL); KOZLOWSKI, Wieslaw, PL 38-300 Gorlice (PL); GRUSZKOWSKI, Stanislaw, PL 38-300 Gorlice (PL)
(74) Representative: Klar, Miroslaw
(86) International application number: PCT/PL2008/050017
(87) International publication number: WO 2009/082250

(56) References cited:
- WO-A-97/09561
- WO-A-98/16403
- WO-A-98/46443
- FR-A- 2 585 446
- FR-A- 2 754 493
- FR-A- 2 757 111
- NL-A- 7 703 630

## Description

The subject of invention is a pressure tank, especially four shells tank, especially a tank for volatile and liquid pressure gases as well as liquids, used in vehicles, machines, stationary and mobile devices.

There is known from international patent application PCT No WO9846443, a flat tank for liquid gas, where two connected shells, upper and lower, have welded central, conical flanges, connected together by the tube with equally spaced on the circumference holes.

There is also known, from the Polish patent application No P- 354299, a tank for gas, especially for liquid propane-butane, consisting of connected together, profiled lower and upper shells, and also profiled middle tube whereas the middle tube has two through holes and two additional, closing shells, and one has connector pipe. The tank is characterized in that in one of additional shell there is a valve with pipe in vertical axle of the tank, having the height exactly defined in relation to the middle shell.

There is known from the Polish patent description No 192015 a toroidal tank for propane-butane, containing the primary tank with connection for valve group on the external shell, characterized in that it has two middle shells, upper and lower, located in the middle, empty space of primary tank and through holes in internal shell of primary tank.

There is known from description of Polish patent application No P-381926 a toroidal tank for liquid gas, equipped with the hole for multi-valve head, supports for fixing the upper plate, located in upper half of the tank and lower roller, having hole with the tube, characterized in that the toroidal tank is can be connected to vehicle chassis by at least one ventilating-fixing bush, beneficially located centrally and beneficially threaded at one end. The bush at upper part is fixed to the lower sphere and at the lower part can be connected to vehicle chassis, beneficially by nut with an washer. The object of the invention is to provide a pressure tank according to claim 1.

Beneficially, the middle bush, has in part located in additional work space, at least one circumferential narrowing on the outer surface, with rounded inner edges.

The internal shell of the coupler can be seamed or seamless tube, or can be formed by rolling a metal sheet. Shells of central coupler may have the form of sphere sections with different radius and/or truncated cones with different lower and upper radiuses and different angle of side walls of cones and/or cylinders with shells welded or stamped so as to create the cylinder with the shell. In the basic alternative of invention, as result of connection of upper and lower external shells together with internal upper and lower shells, being construction part of central coupler, a toroidal tank is created.

In an other alternative of invention, the outer shell is welded between external, upper shell and external, lower shell, creating by this way the special tank.

Next alternative of invention is characterized in that in the central coupler, instead of central bush, a bush with a plug on one end is welded. The other end of this bush has a safety valve and there is a pipe welded to bush, so as to deliver medium to safety valve from defined tank volume, taking into account his way of tank installation. There is also alternative, where in central bush, an side surface there is a hole, which depending on the way of tank installation, assures drawing the volatile medium from upper part of tank.

Pipe connectors for fittings can be placed circumferentially in outer upper shell and or inner lower shell.

In all alternatives of invention, there is a data plate fixed to inner upper or lower shells, beneficially in form of section of ring. The plate can be fixed pointwise or beneficially welded in few places. Beneficially the plate has shoulders on edges.

Beneficially the central bush, in part located in additional work volume, has at least one narrowing on outer surface, with rounded inner edges.

Pressure tank, according to the invention, thanks to use of central coupler, allows for 3% increase of internal volume of the tank with internal fittings, compared to typical design with central tube and internal fittings, depending on the tank height. Placing the tank equipment in internal shells, which are parts of central coupler, allows for thickness reduction of external shell in case of special tank and insures required volume increase for defined test pressures, which in case of welding tank fittings on the outer shell causes at the same thickness and material grade of shell, earlier blowout of tank with fittings or plates for equipment welded to the tank shell than in case of four-shells tank, where equipment is welded to internal shell, what increases the safety of tank usage and allows for material reduction at the same tank dimensions, volume, work parameters and application. Whereas filling the inner part of tank with working medium, where in known designs the central tube not filled with medium is used, allows for reduction of level height of working medium - especially in liquid phase, and for placing inlet pipe connector or outlet connector for gaseous phase to safety valve for work purposes, nearer to the tank shell. Such solution simplifies design of valves used as equipment - especially safety valves - and simplifies design of pipe connectors for these valves.

The central bush of tank, beside being the fixing element, makes possible to guide inlet and outlet tubes and to send both directions signals for tank equipment, plays the role of ventilation duct and alternatively provides for mounting the safety valve.

Thanks to appropriate selection of inner shell sections (thickness, diameters, surface shape) and middle tube of central coupler (diameters, thicknesses, narrowing) there is possibility to change the volume increase for defined blowout pressures, to adjust conditions for tank blowout at given pressure, depending on specific tank application, and defined volume increase before blowout and outflow of tank contents.

The inner, lower or upper shell of central coupler creates part of tight housing for tank fittings, whereas the tank equipment with fittings installed in inner lower and/or upper shell, is contained in limiting outlines of tank outer surfaces, eg. surfaces of outer shells.

In present solutions, as result of tank blowout there is always shell opening without possibility to direct the working medium through tank elements and this creates danger because of lack of control of flowout area and direction. For the tank according to invention, thanks to appropriate design of central coupler, and especially design of sections and shape of middle bush and external shell, especially thanks to circumferential narrowing of external surface of middle tube, as result of blowout the opening of the tank shell obtained, which directs the work medium only to ventilated space. Such solution is beneficial from the safety point of view.

Pointwise fixing of the data plate, contrary to used up to now welding the plate on the hole circumference to the tank shell, makes the work easier and cheaper.

The tank according to invention can be installed together with equipment in any position, depending on requirements.

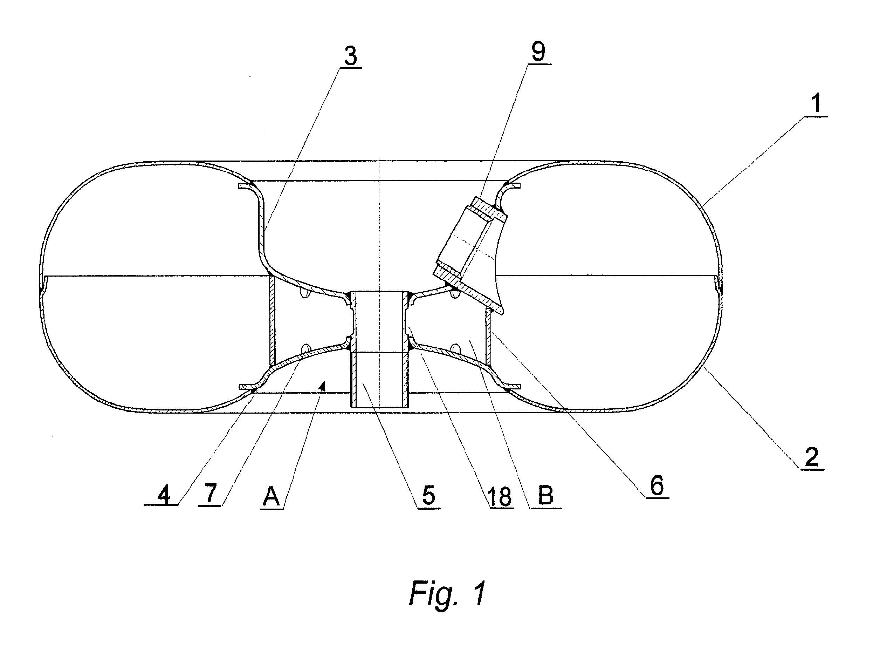

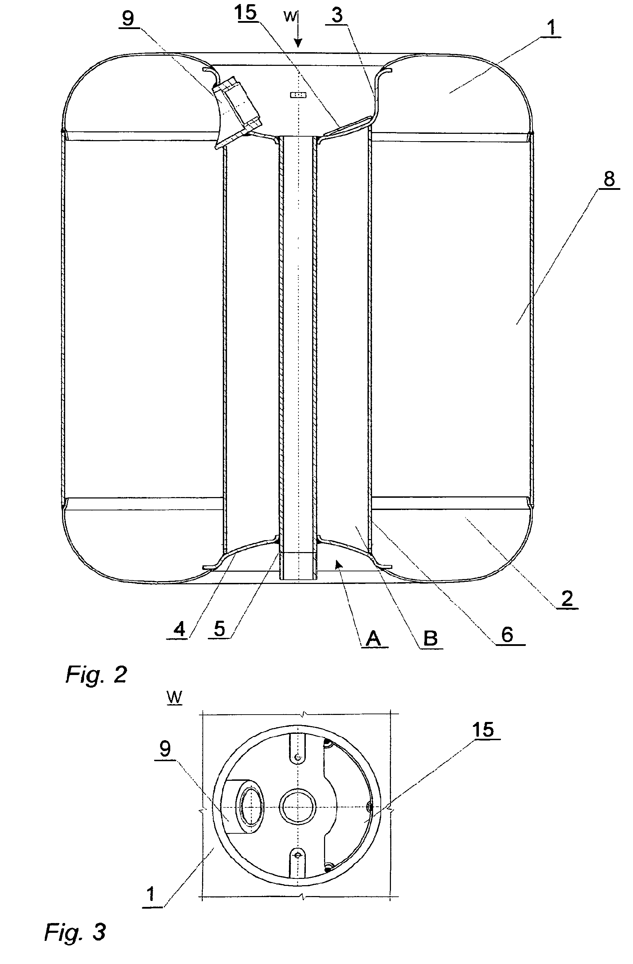

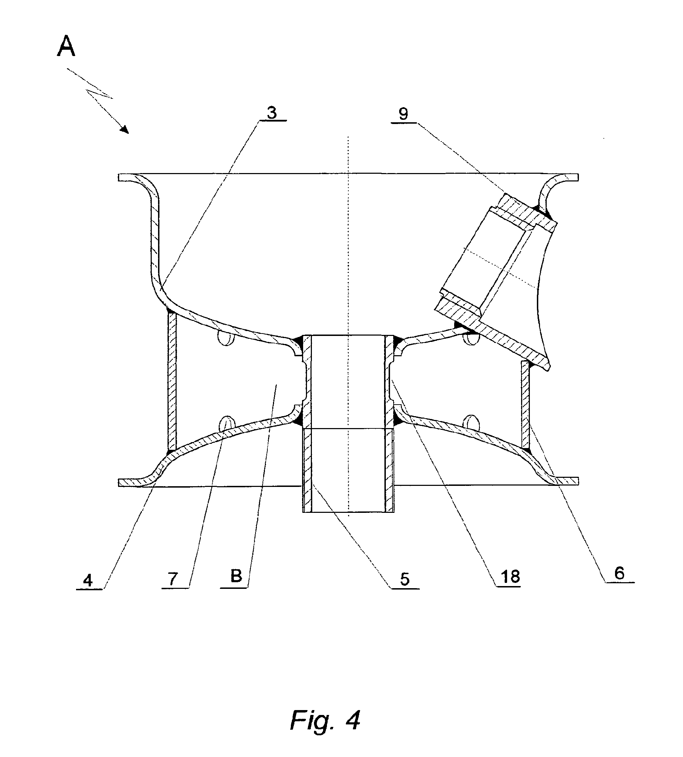

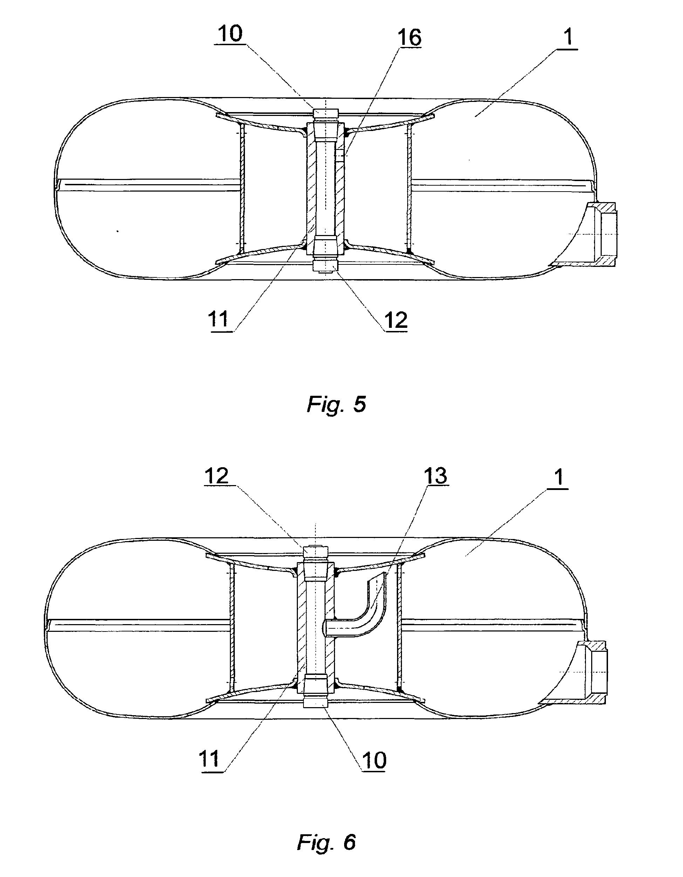

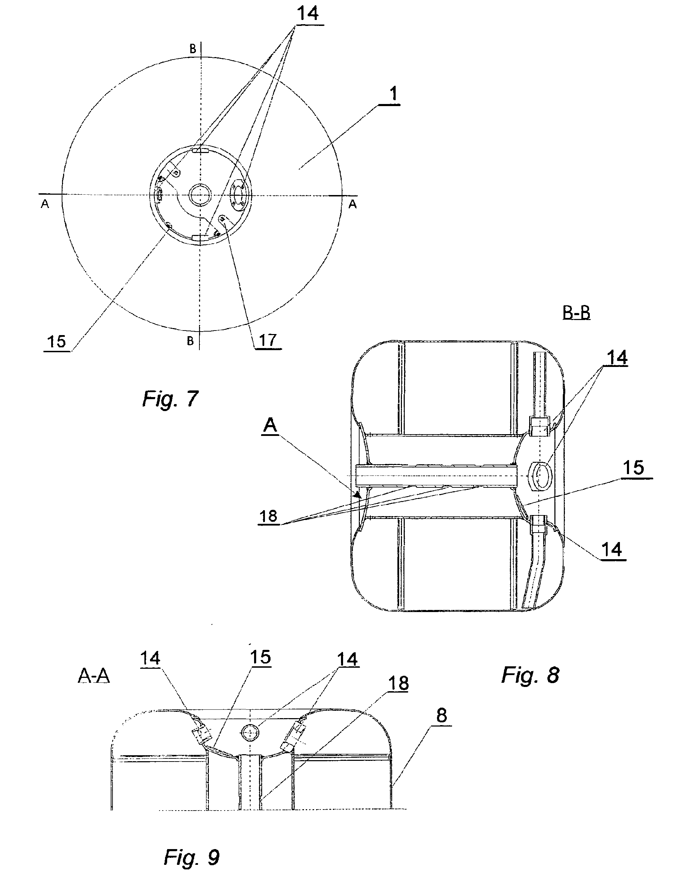

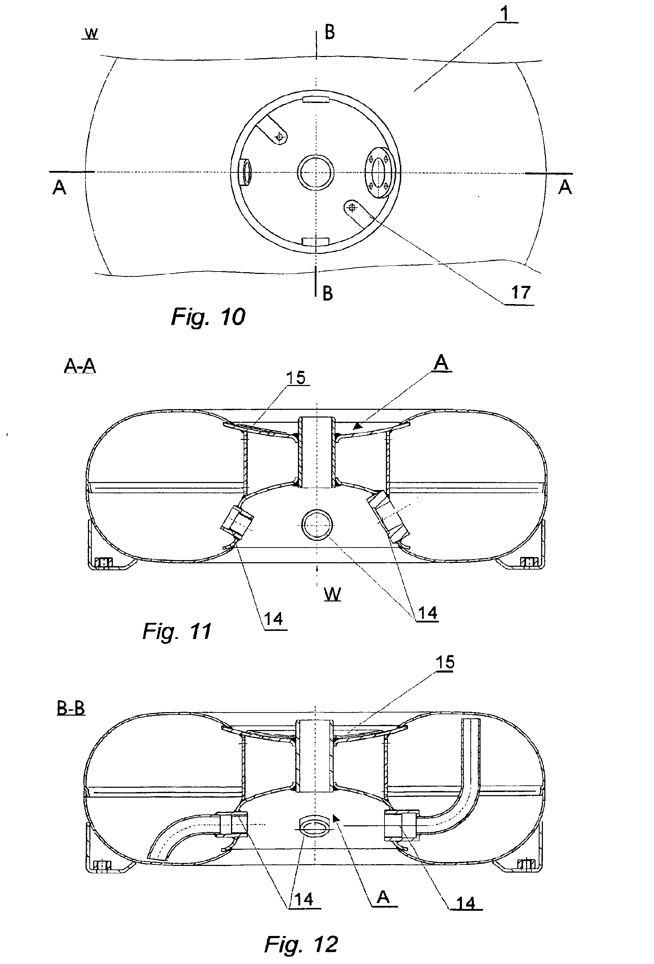

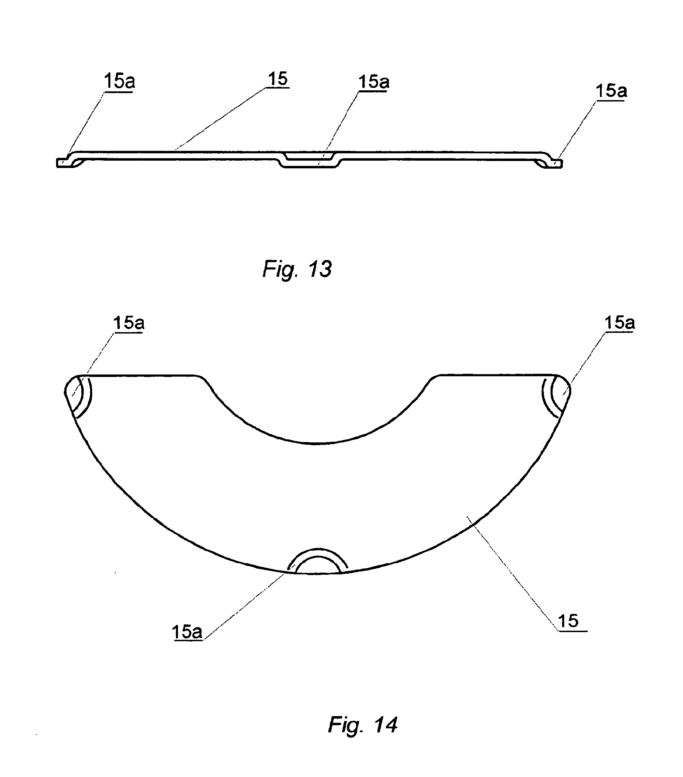

Subject of invention is presented on examples, where fig. 1 shows cross section of toroidal tank, fig. 2 - cross section of special tank, in alternative with outer shell and one connector pipe for fittings, fig. 3 - view W indicated on fig.2, fig.4 - cross section of central coupler, fig. 5 - cross section of the tank in alternative with safety valve in bush, in central coupler, fig. 6 - cross section of the tank in alternative with safety valve in bush in central coupler, with the pipe for outlet of gaseous phase of medium, fig. 7 - upper view of the tank in alternative with circumferentially placed connector pipes, fig. 8 - section B-B from fig. 7, fig. 10 - view W of the tank in alternative with connector pipes in lower position, fig. 11 - cross section A-A of toroidal tank in alternative from fig. 10, fig. 12 - section B-B of the tank in alternative from fig. 10, fig. 13 - front view of the data plate, fig. 14 - upper view of the data plate.

Pressure tank, consists of tightly connected at least four shells, where the outer, upper shell 1 with the outer, lower shell 2 create the outer shell of the tank, whereas the outer, upper concave shell 3 connected with the inner, lower shell 4 through the central bush 5 and the outer shell 6 with holes 7, create the central coupler A, containing additional work space B. Connector pipe 9 for fittings is welded to inner, upper shell 3 and beneficially to inner shell 6 of central coupler A.

In the second alternative of invention, there is the outer shell 8 welded between the outer, upper shell 1 and the outer, lower shell 2.

The next alternative of invention is characterized in that in central coupler A, instead of central bush 5, the bush 11 is welded, with threaded or welded plug 12 on one end, whereas the other end is equipped with safety valve 10 and the bush 11 has the hole 16 in the wall or welded pipe 13 in the wall, which delivers gaseous phase to safety valve or connector pipe letting this phase out.

Beneficially, connector pipes 14 for fittings are located circumferentially in inner, upper shell 3 and/or inner, lower shell 4.

Beneficially, in all alternatives of invention, there is data plate 15 fixed to inner, upper shell 3 and/or inner, lower shell 4, beneficially having the shape of ring section, equipped with shoulders 15a on edges. The data plate 15 is fixed pointwise, beneficially welded in some places. Fixing brackets 17 are fixed to surface of inner, upper shell 3.

The central bush 5, has in part located in additional work space B, at least one circumferential narrowing 18 on outer surface, with rounded inner edges.

## Claims

1. Pressure tank, especially made of four shells, creating a toroidal tank, comprising connected together shells, and equipped with connector pipes for fittings, brackets for fixing the tank and cover, fittings cover, central coupler with holes and central bush, the tank comprising :
- at least four shells tightly connected together,
- wherein an outer upper shell (1) is connected to an outer lower shell (2) thus creating the outer shell of the tank,
- and wherein an inner upper shell (3) is connected to an inner lower shell (4) through the central bush (5) and the outer shell (6), the outer shell having holes (7), thus creating the central coupler (A) containing additional work space,
- and **characterized in that** the connector pipe (9) for fittings is welded to the inner upper shell or to the inner lower shell (4), and to an inner shell (6) between the inner lower shell and the inner outer shell.

2. Pressure tank, according to claim 1, **characterized in that** between the outer upper shell (1) and the outer lower shell (2) there is welded an outer shell (8).

3. Pressure tank, according to claims 1 or 2, **characterized in that** the connector pipes (14) for tank fittings are located circumferentially on the inner outer shell (3) or on the inner lower shell (4).

4. Pressure tank, according to claims 1 or 2, **characterized in that** a data plate (15) beneficially having the shape of ring section is welded to the inner upper shell (3) and/or inner lower shell (4).

5. Pressure tank, according to claim 4, **characterized in that** the data plate (15) has shoulders (15a) on edges.

6. Pressure tank, according to claim 4, **characterized in that** the data plate (15) is fixed pointwise, beneficially welded in few places.

7. Pressure tank, according to claims 1 or 2, **characterized in that** the central bush (5) has in the part located in the additional work space at least one narrowing (18) with rounded external edges.

## Patentansprüche

1. Druckbehälter, insbesondere von vier Boden gebaut, als ringförmiger Behälter, welcher zusammengebaute Platten enthält und mit Stutzen für Armaturen, Halterungen zur Befestigung des Behälters und Deckels, der Armaturenabdeckung, des zentralen Verbindungsstückes mit Löchern und der mittleren Buchse ausgestattet ist uns enthält:
- wenigstens vier, dicht verbindeten Boden
- wo äußere, obere Platte (1) mit äußerer, unterer Platte (2) verbindet ist, was die äußere Schale des Behälters bildet
- wo innerer, oberer Boden (3) mit innerem, unterem Boden (4) durch mittlere Buchse (5) und äußere Schale (6) verbindet ist, wo äußere Schale die Löcher (7) hat, was den zentralen Verbindungsstück (A) mit zusätzlichem Arbeitsraum bildet.
- und **gekennzeichnet dadurch, dass** Stutzen (9) für Armatur ist mit innerem, obere, Boden (3) oder mit innerem, unterem Boden (4) und mit innerer Schale (6), zwischen innerem, unterem Boden und innerem, oberem Boden verschweisst ist.

2. Druckbehälter nach dem Anspruch 1, **gekennzeichnet dadurch, dass** zwischen dem äußeren, oberen Boden (1) und dem äußeren, unteren Boden (2) die äußere Hülle (8) verschweißt ist.

3. Druckbehälter nach dem Anspruch 1 oder 2, **gekennzeichnet dadurch, dass** die Stutzen (14) für Armatur sich am Umfang von innerem, äußerem Boden (3) und/oder am innerem, unterem Boden (4) befinden.

4. Druckbehälter nach dem Anspruch 1 oder 2, **gekennzeichnet dadurch, dass** ein Schild (15), vorzugsweise in Form von einem Ringstück, mit innerem, oberen Boden (3) und/oder mit innerem, unterem Boden (4) verschweisst ist.

5. Druckbehälter nach dem Anspruch 4, **gekennzeichnet dadurch, dass** der Schild (15) Buckel (15a) an den Rändern hat.

6. Druckbehälter nach dem Anspruch 4, **dadurch gekennzeichnet, dass** der Schild (15) punktweise befestigt ist, vorzugsweise in einigen Punkten verschweisst.

7. Druckbehälter nach dem Anspruch 1 oder 2, **dadurch gekennzeichnet, dass** mittlere Buchse (5) im zusätzlichem Arbeitsraum wenigstens eine Verengung (18) mit abgerundeten, äußeren Rändern, hat.

## Revendications

1. Réservoir sous pression, spécialement fait de quatre coques, constituant un réservoir toroïdal, contenant des coques connectées entre elles, et équipé de tuyaux de connexion pour raccords, supports de fixation du réservoir et du couvercle, couvercle des raccords, accouplement central avec trous et bague centrale, le réservoir comprenant :
- au moins quatre coques fermement connectées entre elles,
- dans lequel une coque extérieure supérieure (1) est connectée à une coque extérieure inférieure (2), créant ainsi la coque extérieure du réservoir,
- et dans lequel une coque intérieure supérieure (3) connectée à une coque intérieure inférieure (4), par la bague centrale (5) et la coque extérieure (6), la coque extérieure possédant des trous (7), créant ainsi l'accouplement central (A) contenant un espace de travail supplémentaire
- et **caractérisé par le fait que** le tuyau de raccordement (9) des raccords est soudé à la coque intérieure supérieure (3) ou à la coque intérieure inférieure (4), et à une coque intérieure (6) entre la coque intérieure inférieure et la coque intérieure supérieure.

2. Réservoir sous pression, selon la revendication 1, **caractérisé par le fait qu'**entre la coque extérieure supérieure (1) et la coque extérieure inférieure (2), est soudée une coque extérieure (8).

3. Réservoir sous pression, selon la revendication 1 ou 2, **caractérisé par le fait que** les tuyaux de raccordement (14) pour les raccords du réservoir sont situés circonférentiellement sur la coque intérieure supérieure (3) et sur la coque intérieure inférieure (4).

4. Réservoir sous pression, selon la revendication 1 ou 2, **caractérisé par le fait qu'**une plaque signalétique (15), possédant la forme d'une section annulaire, est soudée à la coque intérieure supérieure (3) et/ou à la coque intérieure inférieure (4).

5. Réservoir sous pression, selon la revendication 4, **caractérisé par le fait que** la plaque signalétique (15) a des épaulements (15a) sur les bords.

6. Réservoir sous pression, selon la revendication 4, **caractérisé par le fait que** la plaque signalétique (15) est fixé ponctuellement par des soudures à quelques endroits.

7. Le réservoir sous pression, selon les revendications 1 ou 2, est **caractérisé par le fait que** la bague centrale (5) possède dans la partie située dans l'espace de travail supplémentaire, au moins un rétrécissement (18) avec les bords extérieurs arrondis.
